# EUROPEAN PATENT SPECIFICATION

(11) **EP 3 201 675 B1**
(45) Date of publication and mention of the grant of the patent: **04.11.2020**
(21) Application number: 15781038.3
(22) Date of filing: 28.09.2015
(51) Int. Cl.: G02B 26/00, C09B 67/44

(54) **ELECTROWETTING DISPLAY DEVICE COMPRISING A RADIATION FILTER**
ELEKTROBENETZUNGSANZEIGEVORRICHTUNG MIT STRAHLUNGSFILTER
DISPOSITIF D'AFFICHAGE D'ÉLECTROMOUILLAGE COMPRENANT UN FILTRE DE RAYONNEMENT

(30) Priority: 29.09.2014 US 201414499901
(43) Date of publication of application: 09.08.2017
(73) Proprietor: Amazon Technologies, Inc., Seattle, WA 98108-1226 (US)
(72) Inventor: BOON, Gerben, Seattle, Washington 98109-5210 (US); FISCHER, Irén, Seattle, Washington 98109-5210 (US); EVERAARS-NIEUWKERK, Cindy, Seattle, Washington 98109-5210 (US); LEGUIJT, Robin, Seattle, Washington 98109-5210 (US); MASSARD, Romaric, Seattle, Washington 98109-5210 (US)
(74) Representative: EIP
(86) International application number: PCT/EP2015/072265
(87) International publication number: WO 2016/050692

(56) References cited:
- US-A1- 2006 110 580
- US-A1- 2007 177 276
- US-A1- 2012 326 956
- US-A1- 2013 128 336
- US-A1- 2013 208 201
- US-A1- 2013 242 367
- US-A1- 2014 029 080
- US-A1- 2014 285 869

## Description

### BACKGROUND

Electrowetting display devices are known which include at least one fluid. Such a fluid may include a dye for example, which in some known devices is susceptible to photo-bleaching, thus decreasing a lifetime of the device. It is known to improve the lifetime of an electrowetting display device by using dyes with a greater resistance to photo-bleaching. US patent app. pub. no. 2006/110580 relates to an electromodulating display, US patent app. pub. no. 2013/242367 relates to an electrowetting display device with a color filter layer, and US patent app. pub. no. 2012/326956 relates to a display element with a light-shielding layer including a black matrix. Further, US2013/242367 relates to an electrowetting display device and US2012/326956 relates to a display element.

It is desirable to improve a lifetime of an electrowetting display device.

### BRIEF DESCRIPTION OF DRAWINGS

FIG. 1 shows schematically a cross-section of a picture element of an example electrowetting display device;
FIG. 2 shows schematically a plan view of the picture element of FIG. 1;
FIG. 3 shows schematically a plan view of an example array of electrowetting picture elements including the picture element of FIG. 1; and
FIG. 4 shows a schematic system diagram of an example apparatus including an electrowetting display device.

### DETAILED DESCRIPTION

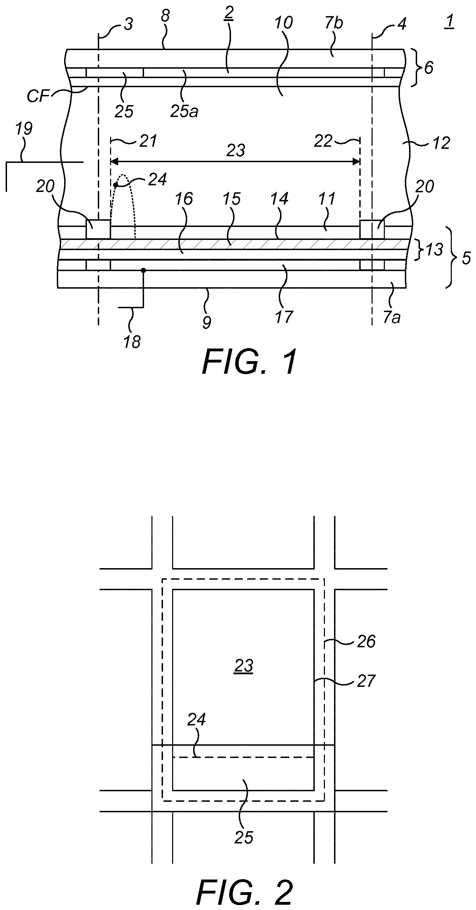

FIG. 1 shows a diagrammatic cross-section of part of an example of an electrowetting display device 1, which may be referred to as a display device, including a plurality of electrowetting picture elements or display elements 2, one of which is shown in the Figure and which may also be referred to as an electrowetting cell. The lateral extent of the display element is indicated in the Figure by two dashed lines 3, 4. The display elements comprise a first support plate 5 and a second support plate 6 which is otherwise referred to herein as a further support plate. The support plates may be separate parts of each display element, but the support plates may be shared in common by the plurality of display elements. The support plates may each include a glass or polymer substrate 7a, 7b and may be rigid or flexible.

The display device has a viewing side 8 on which an image or display effect formed by the display device can be viewed and a rear side 9. In the Figure a surface of the first support plate 5, which surface is in this example a surface of a substrate 7a, defines the rear side 9; a surface of the second support plate 6, which surface is in this example a surface of the substrate 7b, defines the viewing side 8; alternatively, in other examples, a surface of the first support plate may define the viewing side. The display device may be of the reflective, transmissive or transflective type. The display device may be an active matrix driven display device. The plurality of display elements may be monochrome. For a color display device the display elements may be divided in groups, each group having a different color; alternatively, an individual display element may be able to show different colors. The viewing side is an example of a surface for receiving incident radiation for entering the display element, i.e. picture element; such a surface is for example a surface of one of the layers of the second support plate.

The second support plate 6 is positioned such that the first fluid 11 and a second fluid 12 are located between the first 5 and second 6 support plates, in the space 10. At least one of the first and second fluids may be a liquid. The second fluid is immiscible with the first fluid. Therefore, the first fluid and the second fluid do not substantially mix with each other and in some examples do not mix with each other to any degree. The immiscibility of the first and second fluids is due to the properties of the first and second fluids, for example their chemical compositions; the first and second fluids tend to remain separated from each other, therefore tending not to mix together to form a homogeneous mixture of the first and second fluids. Due to this immiscibility, the first and second fluids meet each other at an interface which defines a boundary between the volume of the first fluid and the volume of the second fluid; this interface or boundary may be referred to as a meniscus. With the first and second fluids substantially not mixing with each other, it is envisaged in some examples that there may be some degree of mixing of the first and second fluids, but that this is considered negligible in that the majority of the volume of first fluid is not mixed with the majority of the volume of the second fluid.

The second fluid is electrically conductive or polar and may be water, or a salt solution such as a solution of potassium chloride in water. In examples, the second fluid is polar and in some examples is electrically conductive, but in other examples is not electrically conductive. The second fluid may be transparent; it may instead be colored or absorbing. The first fluid is electrically non-conductive and may for instance be an alkane like hexadecane or may be an oil such as silicone oil. The first fluid is therefore non-polar in at least some examples.

The first fluid may absorb at least a part of the optical spectrum. The first fluid may be transmissive for a part of the optical spectrum, forming a color filter. For this purpose the first fluid may be colored by addition of pigment particles or a dye. Alternatively, the first fluid may be black, i.e. absorb substantially all parts of the visible spectrum, or reflecting. A reflective first fluid may reflect the entire visible spectrum, making the layer appear white, or part of it, making it have a color. In some examples to be described below, the first fluid is black and therefore absorbs substantially all parts of the optical spectrum, for example in the visible light spectrum. In other examples, the first fluid is another color than black and absorbs another part of the optical spectrum, for example a sub-range of wavelengths within the visible spectrum. In other examples, the display device includes picture elements having first fluids which are red, green or blue, or cyan, magenta and yellow to provide a full color display. The term "absorbs substantially all" includes a degree of variation, therefore the first fluid may not absorb all wavelengths, but the majority of wavelengths within a given spectrum such as the visible spectrum, so as to perform the function of the first fluid in the element. The first fluid is therefore configured to absorb substantially all light incident on the first fluid. For example the first fluid may absorb 90% or more of light in the visible spectrum and incident on the first fluid. Further properties of the first and second fluid are described below.

The support plate 5 includes an insulating layer 13. The insulating layer may be transparent or reflective. The insulating layer 13 may extend between walls 20 of a display element 2. To avoid short circuits between the second fluid 12 and electrodes arranged under the insulating layer, layers of the insulating layer may extend uninterrupted over a plurality of display elements 2, as shown in the Figure. The insulating layer has a surface 14 facing the space 10 of the display element 2. In this example the surface 14 is hydrophobic. The thickness of the insulating layer may be less than 2 micrometers and may be less than 1 micrometer.

The insulating layer may be a hydrophobic layer; alternatively, it may include a hydrophobic layer 15 and a barrier layer 16 with predetermined dielectric properties, the hydrophobic layer 15 facing the space 10, as shown in the Figure. The hydrophobic layer is schematically illustrated in Figure 1 and may be formed of Teflon@ AF1600. The barrier layer 16 may have a thickness, taken in a direction perpendicular to the plane of the substrate, between 5 nanometers and several micrometers, for example between 50 nanometers and 2 or 3 micrometers. In other examples the thickness may be between 50 nanometers and 500 nanometers. The barrier layer may be made of an inorganic material like silicon oxide or silicon nitride.

The hydrophobic character of the surface 14 causes the first fluid 11 to adhere preferentially to the insulating layer 13, since the first fluid has a higher wettability with respect to the surface of the insulating layer 13 than the second fluid 12. Wettability relates to the relative affinity of a fluid for the surface of a solid. Wettability may be measured by the contact angle between the fluid and the surface of the solid. The contact angle is determined by the difference in surface tension between the fluid and the solid at the fluid-solid boundary. For example, a high difference in surface tension can indicate hydrophobic properties.

Each display element 2 includes a first electrode 17 as part of the support plate 5. In examples shown there is one such electrode 17 per element. The electrode 17 is electrically insulated from the first and second fluids by the insulating layer 13; electrodes of neighboring display elements are separated by a non-conducting layer. In some examples, further layers may be arranged between the insulating layer 13 and the electrode 17. The electrode 17 can be of any desired shape or form. In examples, each display element 2 may include more than one such electrode as part of the support plate 5. The electrode 17 of a display element is supplied with voltage signals by a signal line 18, schematically indicated in the Figure.

A second signal line 19 is connected to an electrode that is in contact with the conductive second fluid 12. This electrode may be common to all elements, when they are fluidly interconnected by and share the second fluid, uninterrupted by walls. The display element 2 can be controlled by a voltage V applied between the signal lines 18 and 19, which is therefore a voltage applied to the picture element. The electrodes 17 on the substrate 7a are coupled to a control system. In a display device having the picture elements arranged in a matrix form, the electrodes can be coupled to a matrix of control lines on the substrate 7a.

The first fluid 11 in this example is confined to a display element by walls that follow the cross-section of the display element. The extent of the display element, indicated by the dashed lines 3 and 4, is defined by the center of the walls. The area of the surface 14 between the walls of a display element, indicated by the dashed lines 21 and 22, is called the display area 23, over which a display effect occurs. The display effect depends on an extent that the first and second fluids adjoin the surface defined by the display area, in dependence on the magnitude of the applied voltage V described above. The magnitude of the applied voltage V therefore determines the configuration of the first and second fluids within the electrowetting element. In other words, the display effect depends on the configuration of the first and second fluid in the display element, which configuration depends on the magnitude of the voltage applied between the electrodes of the display element. For example, for controlling the configuration of the first and second fluids, a constant potential may be applied to an electrode in contact with the conductive second fluid 12 and the magnitude of a potential applied to the electrode 17 on the substrate 7 may be controlled. The display effect gives rise to a display state of the display element for an observer looking at the display device. When switching the electrowetting element from one fluid configuration to a different fluid configuration the extent of second fluid adjoining the display area surface may increase or decrease, with the extent of first fluid adjoining the display area surface decreasing or increasing, respectively.

Therefore, the first fluid 11 adjoins at least part of the display area 23. A size of the part of the display area adjoined by the first fluid depends on a voltage applied between the electrodes of the picture element. In examples described herein, when a zero or substantially zero voltage is applied between the electrodes, i.e. when the electrowetting element is in an off state, the first fluid 11 forms a layer between the walls, as shown in FIG. 1. The term "substantially zero" in examples refers to a voltage which is minimal, for example as close to zero such that the first fluid adjoins a maximum extent of the display area 23. Application of a voltage will contract the first fluid, for example against a wall as shown by the dashed shape 24 in FIG. 1. The controllable shape of the first fluid, in dependence on the magnitude of applied voltage, is used to operate the picture element as a light valve, providing a display effect over the display area 23. For example, switching the fluids to increase adjoinment of the second fluid 12 with the display area 23 may increase the brightness of the display effect provided by the element.

This display effect determines the display state of the picture element which an observer will see when looking towards the viewing side of the display device. The display device is capable of providing display states from black to white, including any intermediate grey state; in a color display device, the display state may also include color.

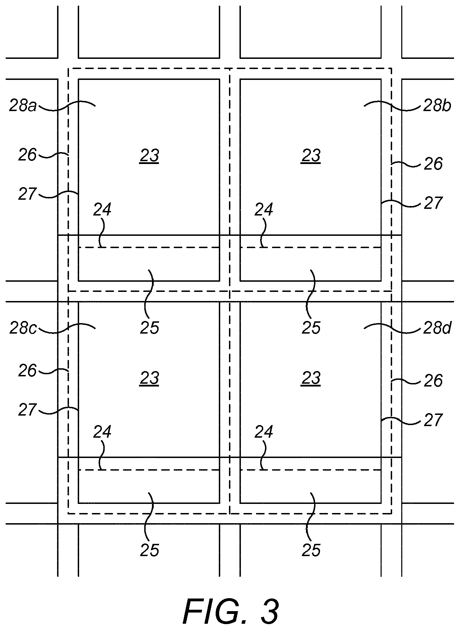

The second support plate 6 in the example of FIG. 1 comprises at least one layer. The at least one layer includes for example a color filter CF, for example as a layer, and a layer comprising a radiation filter 25, described in more detail below. The color filter CF absorbs at least one wavelength of light, for example in the visible spectrum, thus filtering the light passing through the color filter to provide a colored display state; this may be the case in examples where the first fluid is black. The color filter may be formed of a material having a color filtering property, or may comprise a layer of a material transmissive for substantially all, for example 90% or more, wavelengths of light, in for example the visible spectrum, with a coating to act as the color filter. The color filter CF in the example of FIG. 1 is positioned between the radiation filter 25 and the space 10 and for example covers substantially all of the display area. In other examples, the color filter CF may lie on top of the radiation filter 25, such that the radiation filter 25 is between the color filter CF and the space 10. Further examples include a single filter element which performs the function of the color filter and the radiation filter and thus is a combined color and radiation filter; such examples may comprise a region which acts as the color filter but not the radiation filter and a different region which acts as the radiation filter but not the color filter; in other examples a single filter element may have a region which performs the function of both the color filter and the radiation filter, which may in some further examples be in addition to separate color filtering and radiation filtering regions. The second support plate 6 in other examples does not include a color filter, for example in cases where the first fluid 11 is appropriately colored, for example due to the addition of a dye or pigment, for providing the color of a display state. The use of color filters to produce a colored display state of the display element is described further below, with reference to FIG. 3.

At least one of the first fluid 11 or the second fluid 12 are susceptible to deterioration by exposure to radiation of at least one predetermined wavelength. Deterioration may be any type of physical or chemical degradation, disintegration or decomposition of the first fluid and/or the second fluid, for example of a component of the first and/or second fluid. Exposure to radiation in examples refers to the radiation being incident on the first and/or second fluid, for example such that the first and/or second fluid are irradiated by the radiation. At least one of the first fluid or the second fluid may be susceptible to exposure to radiation over a sustained or long period of time, for example over a period of operation of the display device of a day or more, either over one continuous period of time or over a plurality of periods of time with a total duration of a day or more. Alternatively, the at least one of the first fluid or the second fluid may be susceptible to exposure to short bursts of radiation, for example an hour or less.

In examples, at least one of the first fluid or the second fluid comprises an additive which is susceptible to deterioration by exposure to the radiation of the at least one predetermined wavelength. The additive may be or comprise a fluid and/or solid particles, for example. The deterioration may be one or more of: a decomposition of the additive, or, with the additive being a colorant, such as a dye or a pigment as explained above, a change of color of the colorant for example due to a decomposition of the chemical structure of the colorant. Such a change of color may be a decoloring, for example a bleaching, for example due to a photobleaching reaction on exposure to radiation. In examples, the decoloring may result in the colorant changing to a different color from its original color. A change of color of the colorant in examples reduces the amount of the colorant having the original, i.e. desired, color. In such examples, the amount or concentration of the colorant with the original color is reduced compared with an initial amount or concentration of colorant, resulting in decoloring.

In some examples, a deterioration of at least one of the first or second fluids may be a change in electrical properties of the fluid for example due to ion formation from a decomposition of the chemical structure of a component of the fluid. A deterioration of at least one of the first or second fluids can cause a change, for example a decrease, in function or performance of at least one of the first fluid or the second fluid. For example, the deterioration may cause a change, for example a decrease, in switching performance of one or both of the first and second fluids.

It is known to reduce the deterioration of the first or second fluids due to radiation exposure by using fluid compositions which are less susceptible to deterioration or damage by radiation, for example, by using a dye which is chemically less sensitive to photobleaching. Given the many operational requirements of a fluid in an electrowetting display device, identifying suitable alternative chemical compounds which are less susceptible to deterioration is a complex task. The inventors have realized that a radiation filter configured in respect of the radiation wavelength(s) the first and/or second fluids are susceptible to deterioration by may be used to reduce exposure of the first or second fluids to damaging radiation whilst giving an acceptable display quality.

In the example of FIG. 1, the second support plate 6 comprises a layer comprising a radiation filter 25, for example a radiation filter layer, configured to filter at least some, i.e. at least a portion of the, radiation of the at least one predetermined wavelength for which the at least one of the first fluid or the second fluid are susceptible to deterioration. For example, the radiation filter 25 in examples selectively blocks radiation of the at least one predetermined wavelength, for example by absorbing or reflecting the radiation, such that radiation of the at least one predetermined wavelength is not transmitted through the radiation filter. In examples, some or all radiation with a wavelength which is not one of the at least one predetermined wavelengths is transmitted or at least partly transmitted through the radiation filter. The radiation filter is for example a layer which may have a substantially uniform thickness ("substantially" means within acceptable manufacturing tolerance). As the skilled person will readily appreciate, the radiation filter in examples is formed of or comprises a suitable material or compound for filtering the at least one predetermined wavelength, for example including a dye or a pigment or an organic material; the specific material will depend on the specific wavelength or range of wavelengths to be at least partially filtered. The radiation filter in examples is formed of a non-fluid material, for example a solid plastic material which may be flexible or rigid. This non-fluid material may have been formed by applying and then hardening or solidifying a fluid material.

As the radiation filter 25 is positioned between the viewing side 8 of the display device 1 and the first 11 and second 12 fluids, the radiation filter 25 therefore prevents or reduces incident radiation of the at least one predetermined wavelength, for example ambient radiation which is incident on the second support plate 6 from the viewing side 8 of the display device 1, from being transmitted from the side of the radiation filter 25 on which the radiation is incident, for example the side of the radiation filter 25 closest to the viewing side 8, to the other, for example opposite, side of the radiation filter 25, for example the side of the radiation filter 25 closest to the second fluid 12. This prevents the parts of the first 11 and second 12 fluids which are beneath, i.e. covered by, the radiation filter 25 from being exposed, or for example irradiated, by the radiation of the at least one predetermined wavelength. The parts of the first 11 and second 12 fluids which are protected from the radiation by the radiation filter 25 in this way are therefore not deteriorated, or have a reduced deterioration, by exposure to the radiation whilst beneath the radiation filter. This improves the lifetime of the display device 1 by increasing the useful lifetime of one or both of the first and second fluids.

In some examples, the radiation filter may cover substantially all of the display area, for example where the radiation filter includes a photochromic material as described later. The term "substantially all" in examples includes a degree of variation; for example, the radiation filter may cover a majority of the display area, for example more than: 50%, 60%, 70%, 80%, or 90%, or all of the display area. In other examples, the radiation filter covers less than all of the display area.

The term "cover" used here refers to the radiation filter being positioned over at least part of the display area such that it lies in a plane parallel to a plane of the display area, with a plane of the radiation filter overlapping the plane of the display area. The radiation filter may be separated and therefore need not contact the display area or the first fluid. For example, a part of the display area covered by the radiation filter may be considered to be overlapped by the radiation filter when the extent of the radiation filter covering the part of the display area is projected into the plane of the display area so as to be coincident with, i.e. occupies the same area as, the covered part of the display area. With the radiation filter substantially covering the first fluid when the first voltage is applied, the radiation filter is for example located above the part of the first fluid overlapped by the radiation filter, so that the radiation filter can filter at least some of the radiation of the at least one predetermined wavelength from reaching the first fluid overlapped by the radiation filter. For example, a shape and/or size of the part of the display area adjoined by the first fluid is comparable with, or smaller than, the shape and/or size of the radiation filter.

In the example of FIG. 1, the radiation filter covers around 20% of the extent of the display area. This is shown in FIG. 2, which shows schematically a plan view of the picture element of FIG. 1; FIG. 2 is described in more detail below. In a further example, the extent, for example the area, of the radiation filter in a plane parallel to a plane of the display area covers one of: up to 20%, up to 30%, up to 40%, up to about 50% or up to 50% of the display area. In such examples, a planarisation layer 25a may for example be used adjacent to the radiation filter, to provide planar surfaces within the support plate for adjoining the overlying substrate 7b and the underlying colour filter CF.

Despite the radiation filter covering an extent of the display area and therefore reducing an amount of radiation which can be transmitted through the second support plate, the inventors have found that an acceptable quality of display effects is obtainable whilst also protecting the first and/or second fluids from harmful radiation, thus increasing the device lifetime.

In an example, the second support plate has a side furthest from the first and second fluids for a viewer to view a display effect provided by the picture element, and the first and second fluids are configurable to a plurality of configurations, the size of the part of the display area adjoined by the first fluid, i.e. a proportion of the first fluid overlapped by the radiation filter, being different for different of the plurality of configurations, for controlling a proportion of at least one of the first or second fluids irradiated by radiation of the at least one predetermined wavelength having passed through the side of the second support plate furthest from the first and second fluids. Such an example is shown in FIG. 1, in which the side furthest from the first and second fluids is the viewing side 8, from which the viewer can observe the display device 1. In the example of FIG.1, the configuration of the first 11 and second 12 fluids is controllable in dependence on the voltage applied between the signal lines 18 and 19, as previously explained. By applying different voltages, the first fluid 11 adjoins a different extent of the display area 23. The larger the magnitude of the voltage applied between the signal lines 18 and 19, the smaller the size of the part of the display area 23 adjoined by the first fluid 11, until the first fluid is fully contracted. Thus, the larger the magnitude of the applied voltage, the more the first fluid 11 is contracted.

Controlling the contraction of the first fluid 11 also controls the proportion of the first fluid 11 lying beneath, i.e. being covered by, the radiation filter 25. The greater the contraction of first fluid 11, the larger the proportion of the first fluid 11 which lies underneath, and is covered by, the radiation filter 25. Therefore, in an example, the first fluid 11 may be contracted underneath the radiation filter so as to be completely covered by the radiation filter 25. Thus, with a greater proportion of the first fluid 11 being contracted underneath the radiation filter, the smaller the proportion of the first fluid 11 which is irradiated by radiation passing through the viewing side 8 of the support plate in a direction towards the first fluid 11. This is because the radiation filter 25 is arranged to filter at least some of incident radiation of the predetermined wavelength(s) and thereby to prevent radiation from the viewing side 8 from passing through to the part of the first fluid 11 underneath the radiation filter 25, protecting that part of the first fluid 11 from irradiation by that radiation. The part of the first fluid 11 which isn't covered by the radiation filter 25 is however irradiated by radiation from the viewing side 8. Thus, with a greater proportion of the first fluid 11 being contracted underneath the radiation filter, less first fluid is exposed to the radiation of the predetermined wavelength and therefore less deterioration of the first fluid occurs.

The inventors have found that, even if part of the first fluid 11 isn't covered by the radiation filter 25, the radiation filter 25 can still reduce the radiation damage to the first fluid 11 sufficiently to give an improved display device lifetime. Similarly, in examples where the second fluid 12 is susceptible to deterioration by exposure to radiation of the at least one predetermined wavelength, the inventors have realized that configuring the display device 1 such that the radiation filter 25 at least partly covers the second fluid 12 reduces the extent of the radiation damage to the second fluid 12 such that the display device has an extended lifetime compared with known display devices.

In further examples, it is envisaged that controlling movement of the first and second fluids may be achieved using multiple electrodes and/or surfaces with different wettabilities for the fluids, for contracting at least part of the first fluid and/or the second fluid to be covered by the radiation filter.

Arranging the radiation filter as part of the second support plate ensures, in examples, that the radiation filter does not affect or interfere with the fluid motion within the picture element, for example by maintaining a planar surface of the second support plate adjoining the first and/or second fluid.

In further examples, the electrowetting display device is part of an apparatus including a control system, for example the display device control subsystem described below, for selectively applying to the picture element one of a plurality of voltages of different magnitudes, including a first voltage with a non-zero voltage magnitude. These voltages are used for being applied to the picture element to control the fluid configuration. In such examples, the radiation filter has an extent in a plane parallel to a plane of the display area which substantially covers the first fluid with the first voltage being applied to the picture element. In these examples, radiation incident on the radiation filter from the viewing side is prevented from passing through the radiation filter and irradiating the first fluid, which is beneath the radiation filter with the first voltage being applied to the picture element. For example, the radiation filter may be arranged to prevent transmission of a proportion of radiation of at least one wavelength, where for example the proportion may be all or a majority of the radiation at that at least one wavelength. The term "substantially covers" refers in examples to the radiation filter covering at least 50% of a volume of the first fluid, i.e. with at least 50% of the volume of the first fluid lying beneath the radiation filter, or at least 50% of an area of the display area adjoined by the first fluid.

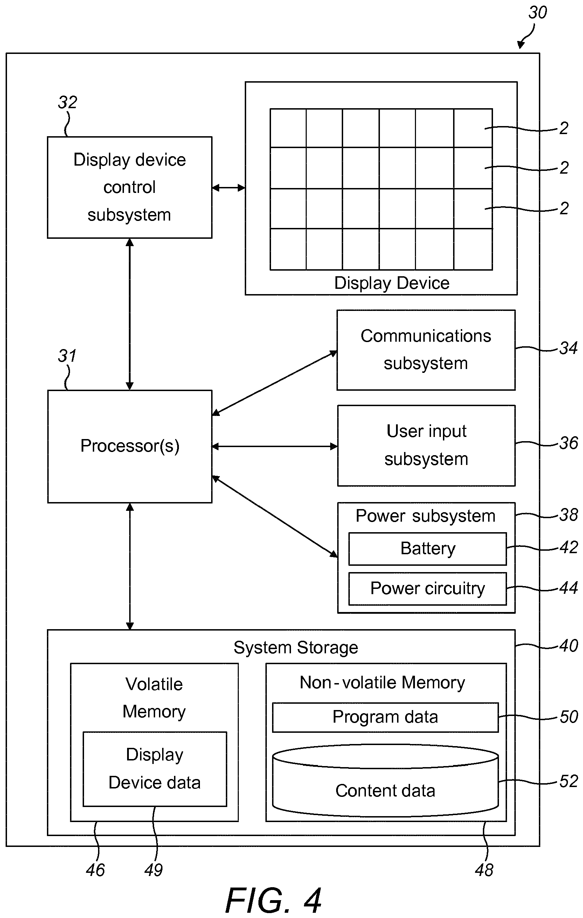

Such an example is shown in FIGS. 1 and 2. In FIGS. 1 and 2, a control system, for example the display device control subsystem described later, applies one of a plurality of different voltages to the picture element 2 via the signal lines 18 and 19. As the skilled person will understand, the control system may include a controller, including at least one processor. This processor may be a general purpose processor, a microprocessor, a digital signal processor (DSP), an application specific integrated circuit (ASIC), a field programmable gate array (FPGA) or other programmable logic device, a discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration. The processor may be coupled, via one or more buses, to read information from or write information to one or more memories, for example those described later with reference to FIG. 4. The processor may additionally, or in the alternative, contain memory, such as processor registers. Any of these memories may store display effect data corresponding with a desired display effect for display. Such a memory may also be a non-transitory computer readable storage medium having computer readable instructions, i.e. computer software. The one or more memories may include a processor cache, including a multi-level hierarchical cache in which different levels have different capacities and access speeds. The memory may further include random access memory (RAM) and other volatile storage devices. The dashed line 24 shows the shape of the first fluid 11 when the first voltage is applied to the picture element 2, the first voltage being a non-zero voltage. The radiation filter 25 in this example covers all of the first fluid 11 when the first voltage is applied. In some examples, the radiation filter covers around 80%, for example 80%, of the first fluid when the first voltage is applied. In other examples, the radiation filter covers approximately all of the first fluid 11 when the first voltage is applied. In examples, the term "approximately" includes a degree of variation, such that the radiation filter 25 covers all of the first fluid 11 within acceptable manufacturing tolerances or covers 90% or more of an extent or volume of the space 10 occupied by the first fluid, with the first voltage applied.

This can be seen in FIG. 2, which shows the picture element of FIG. 1 in a plan view of the hydrophobic layer of the first support plate. The dimension of the central picture element in FIG. 2, corresponding to the dashed lines 3 and 4 of the picture element 2 in FIG. 1, is indicated by the dashed line 26. Line 27 indicates the inner border of a wall; the line is also the edge, i.e. a perimeter, of the display area 23. The dashed line 24 marks the boundary between the first fluid 11 and the second fluid 12 when the first voltage is applied to the picture element 2. The radiation filter 25 covers a slightly larger amount, i.e. area or extent, of the display area 23 than the area of the display area 23 adjoined by the first fluid 11 when the first voltage is applied. In other examples, the radiation filter covers approximately the same area or extent of the display area as the area of the display area adjoined by the first fluid when the first voltage is applied, as explained above.

In examples, the picture element may be configured to determine a preferential direction of motion of the first fluid upon application of a voltage to the picture element, for example as described in international patent application number WO2007/141218. In a further example, at a part of the first support plate there is no electrode present such that the first fluid tends to move towards this part when a voltage is applied to the picture element, as described in international patent application number WO2004/104671. For example, the picture element may be arranged such that the first fluid 11 preferentially adjoins a predetermined area of the display area 23 when a voltage, for example a non-zero voltage or a maximum voltage which the control system is configured to apply to the picture element, is applied to the picture element. In an example, this is because the first fluid tends to move towards the predetermined area upon application of a voltage. The predetermined area may be considered to act as a collection area for the first fluid 11.

In an example according to such examples, the radiation filter 25 covers at least part of the collection area. In some examples, the radiation filter 25 covers substantially all of the collection area, for example without covering further of the display area. In examples, the term "substantially all" is as defined above with reference to the coverage of the radiation filter of the display area. As the first fluid 11 adjoins substantially all the display area when a minimum voltage, for example a zero voltage, is applied to the picture element and the first fluid adjoins the collection area when a non-zero voltage is applied, with the radiation filter 25 covering the collection area as discussed above, the coverage of the first fluid 11 by the radiation filter 25 may, in some examples, be to a greater extent than if the radiation filter covered a different part of the display area. This reduces exposure of the first fluid to the radiation of the at least one predetermined wavelength compared with other arrangements of the radiation filter 25, reducing the deterioration of the first fluid due to radiation damage. This increases the lifetime of the display device.

In examples, the extent of the radiation filter covers one of: up to 50%, up to 60%, up to 70%, up to 80%, up to 90%, up to 95%, up to about 100%, or up to 100% of the first fluid with the first voltage being applied to the picture element. For example, with the radiation filter covering 50% or more of the first fluid when the first voltage is applied to the picture element, the radiation deterioration of the first fluid is reduced sufficiently such that the display device has an extended lifetime compared with known display devices.

In examples including those described above, the extent, for example area, of the radiation filter is such that the radiation filter does not substantially cover a part of the display area not adjoined by the first fluid with the first voltage being applied to the picture element. FIGS. 1 and 2 show an example of this type. In FIGS. 1 and 2, the radiation filter 25 does not cover the part of the display area 23 uncovered by the first fluid 11 when the first voltage is applied, i.e. the part of the display area 23 to the right of the drop-like shape 24 of the first fluid 11. The term "does not substantially cover" refers in examples to the radiation filter having an extent so as not to cover at most 50% of a volume of the first fluid, i.e. with at most 50% of the volume of the first fluid not lying beneath the radiation filter, or at most 50% of an area of the display area not being adjoined by the first fluid. The term "cover" used in the context of the term "does not substantially cover" in examples means that the radiation filter is positioned so as not to lie over, i.e. not to overlap, a part of the display area. Thus, first fluid not overlapped or covered by the radiation filter may be exposed to incident light entering the element.

In the examples of FIGS. 1 and 2, the radiation filter 25 is shaped and located in the second support plate to cover a region of the display area in which the first fluid 11 is contracted, i.e. collects, when the first voltage is applied. The radiation filter 25 in this example has a rectangular shape however, in other examples, the radiation filter 25 may have a different shape. For example, where the collection area for the first fluid is a quarter circle located at a corner of the display area, the radiation filter may also be located to cover the same corner of the display area as the collection area and may have a quarter circle or other shape, for example rectangular or square, so as to cover the region where the first fluid contracts to. The collection area in further examples is not at the edge or corner of the display area; for example, it may be at or close to the center of the display area. In such examples, the radiation filter may be located to cover a part of the display area where the first fluid collects when the first voltage is applied; therefore the radiation filter may not cover an edge or corner region of the display area.

In some examples, an amount of filtering of radiation varies at different locations within the radiation filter. For example, the radiation filter may have a first part and a second part, the first part configured to filter a smaller quantity, i.e. a smaller proportion, i.e. a lesser degree, of the radiation of the at least one predetermined wavelength than the second part. The proportion of radiation filtered in examples is a ratio of an amount of radiation of the at least one predetermined wavelength absorbed or otherwise not passing through the radiation filter from the viewing side to the fluids, relative to an amount of radiation of the at least one predetermined wavelength incident on the radiation filter. An amount may refer to a number of photon counts or another measurement of radiation intensity or flux, for example. A part may be for example a region, area or point of the radiation filter.

As shown in FIG. 1, with the first voltage being applied to the picture element, the first fluid 11 in this example forms a drop-like shape 24. A central region of the drop-like shape is thicker than edge regions of the drop-like shape, the thickness being taken in a direction perpendicular to the plane of the display area. In examples where the radiation filter has different parts filtering different amounts of radiation, a second part of the radiation filter 25 may be located and/or shaped so as to cover the thicker central region of the first fluid when contracted. A first part of the radiation filter 25 may be located and/or shaped to cover the edge regions of the first fluid when contracted. Thus, in some examples the second part may filter a greater proportion of radiation than the first part, given the greater amount of first fluid covered by the first part; in other examples, the second part may filter a lesser proportion of radiation than the first part, for example if a thicker region of first fluid is less susceptible to the deterioration. Therefore, the lateral position of the first and second parts within the radiation filter may be selected according to the amount of filtering required.

Features of any of the above examples may be combined. For example, the extent of the radiation filter may cover one of: up to 50%, up to 60%, up to 70%, up to 80%, up to 90%, up to 95%, up to about 100%, or up to 100% of the first fluid with the first voltage being applied to the picture element and may also not substantially cover the part of the display area not adjoined by the first fluid with the first voltage being applied to the picture element.

The first voltage in examples is a maximum voltage which the control system is configured to apply to the picture element. For example, the control system may be arranged, for example programmed, to apply one of a plurality of discrete voltages to the picture element. The maximum voltage in an example is the voltage of the plurality of discrete voltage levels with the largest absolute magnitude.

In an example in which the first voltage is such a maximum voltage, the radiation filter substantially covers the first fluid when the first voltage is applied to the picture element, i.e. when the first fluid is fully contracted and adjoining the minimum area, i.e. the minimum size of a part, of the display area 23 achievable from the plurality of discrete voltages the control system is programmed to apply. In such an example, the radiation filter 25 prevents radiation from the viewing side 8 of the display device 1 from irradiating part of the first fluid 11 covered by the radiation filter 25 when a substantially zero voltage is applied to the picture element 2, where "substantially zero" in examples is as defined above. The radiation filter 25 also prevents radiation from the viewing side 8 of the display device 1 from irradiating substantially all of the first fluid 11 when the first voltage is applied. In examples, the term "substantially all" is as defined above with reference to the coverage of the radiation filter of the display area. Accordingly, a high proportion of the first fluid 11 may be protected from irradiation by the radiation.

The non-zero voltage magnitude of the first voltage corresponds to a configuration of the first and second fluids, with the first fluid contracted, for providing a white display effect of the picture element in examples. In such an example, the maximum voltage which the control system is configured to apply to the picture element corresponds to the white display effect. For example, the white display effect is the brightest display effect the picture element is configured to display. The term "brightest" refers in examples to the display effect in which the highest proportion of light is transmitted from the rear side to the viewing side (for a transmissive display for example) or reflected back from the rear side to the viewing side (for a reflective display for example). In examples, the white or brightest display effect is the display effect achieved when the first fluid adjoins the minimum extent or area of the display area which may be obtained using the control system.

In examples, the at least one predetermined wavelength the at least one of the first fluid or the second fluid are susceptible to deterioration by is one or more of the following wavelengths: at least one wavelength in the range of about 100 to about 380 nanometers or at least one wavelength in the range of about 700 nanometers to about 1000 nanometers. The term "about" includes a degree of variation, therefore the at least one wavelength may be within the range of wavelengths within acceptable measurement uncertainties, for example within 10% of the upper or lower bound of the range of wavelengths. In an example, the at least one predetermined wavelength is one or more of: at least one wavelength in the ultraviolet range of the electromagnetic spectrum, for example within the range of 100 to 380 nanometers or at least one wavelength in the infrared range of the electromagnetic spectrum, for example within the range of 700 to 1000 nanometers. In an example, the radiation filter 25 filters radiation of a plurality of wavelengths, for example a plurality of wavelengths within one or more of the ultraviolet or infrared ranges of the electromagnetic spectrum. In a further example, the radiation filter 25 filters ultraviolet and infrared radiation.

The term "substantially" used here includes a degree of variation, therefore the radiation filter may not absorb or reflect all wavelengths, but the majority of wavelengths within the visible spectrum, for example more than 50% of wavelengths. The radiation filter in examples absorbs or reflects a proportion of less than 100%, for example a proportion of between 50% and 99%, of each or some of the wavelengths in the visible spectrum. In a further example, the radiation filter absorbs or reflects a proportion of more than 50%, 70% or 90% of incident radiation with a wavelength in the visible spectrum. In a still further example, the radiation filter absorbs or reflects more than: 50%, 70% or 90% of wavelengths within the visible spectrum.

In an example, the radiation filter is configured to transmit radiation with at least one wavelength in the range of about 380 to about 700 nanometers. For example, the radiation filter may be configured to transmit radiation with at least one wavelength within the visible range of the electromagnetic spectrum, for example within the range of 380 to 700 nanometers.

In an example, the radiation filter transmits substantially all visible light, where the term "substantially" is as defined above with reference to absorption or reflection. In an example, the radiation filter is substantially transparent to visible light, where the term "substantially" is as defined above with reference to absorption or reflection.

The part of the radiation filter which substantially transmits visible light is arranged to filter at least some other radiation which the first or second fluids are susceptible to deterioration by; for example ultraviolet and/or infrared radiation.

In examples, the first support plate includes at least one electronic component used for applying the voltage to the picture element, with the radiation filter substantially covering the at least one electronic component. In examples, the at least one electronic component comprises one or more of: a transistor, for example a thin-film transistor (TFT), a capacitor, or a control line. With the radiation filter substantially covering the at least one electronic component, i.e. with an extent of the radiation filter substantially covering an extent of the at least one electronic component, the extents being substantially parallel to each other, ambient radiation incident on the viewing side of the second support plate in examples is at least partly prevented from passing through the radiation filter and reaching the at least one electronic component. In this way, the at least one electronic component is protected from damage by the ambient radiation.

The first fluid in examples is confined within the picture element by at least one wall which forms a perimeter of the display area, with the radiation filter at least partly covering the at least one wall. Such an example is illustrated in FIGS. 1 and 2, in which the radiation filter 25 substantially covers the part of the wall 20 adjacent to the first fluid 11 when the first voltage is applied. In other examples, the radiation filter 25 covers part of the wall 20, for example, less than a width of the wall 20 in a direction parallel to the plane of the display area 23. In further examples, the radiation filter does not cover the at least one wall.

In further examples in which the first fluid is confined within the picture element by at least one wall which forms a perimeter of the display area, the radiation filter at least partly covers the display area and one of: substantially all, some, or none of the at least one wall. For example, the radiation filter may be used for a dual purpose: both to at least partly cover the display area and reduce the deterioration of the at least one of the first fluid or the second fluid due to exposure to radiation of the at least one predetermined wavelength, and also to cover some or substantially all of the at least one wall. In an example, the radiation filter does not extend to cover all or part of a display area of a further picture element adjacent to the picture element described above.

In further examples, the location of the radiation filter in the second support plate forms a pattern for a plurality of picture elements such that the radiation filter covers the corresponding same part of the display area for each of the plurality of picture elements. The pattern may be a regular or repeating arrangement of the radiation filter in the second support plate of the plurality of picture elements. In other examples, the location of the radiation filter in the second support plate forms an irregular pattern for a plurality of picture elements. This irregular pattern may decrease the visibility of the radiation filter to a viewer of the device or reduce unwanted display effects such as Moiré. For example, for a rectangular arrangement of 4 picture elements arranged in a 2 x 2 picture element matrix, and as viewed from the viewing side, the radiation filter may cover a bottom right corner of the upper left picture element, a bottom left corner of the upper right picture element, an upper right corner of the lower left picture element and an upper left corner of the lower right picture element, such that the radiation filters are located at a center region of the 4 picture element arrangement. In such an example, the radiation filter may also cover a wall junction where the walls for each of the picture elements meet at a four-way crossing.

FIG. 3 shows a further example. Features are illustrated in FIG. 3 which are similar to those of FIGS. 1 and 2; the same reference numerals are used and corresponding descriptions apply.

Each of the picture elements of the example array of electrowetting picture elements shown in FIG. 3 is a different color. In the picture element in the upper left-hand corner of FIG. 3, the part of the second support plate which does not include the radiation filter 24 comprises a green filter 28a such that it appears green from the viewing side 8 when the first voltage is applied. The picture element in the upper right-hand corner and lower left-hand corner of FIG. 3 comprise, respectively, a blue filter 28b and a red filter 28c such that these picture elements appear blue and red respectively from the viewing side 8 when the first voltage is applied. In the picture element in the lower right-hand side, the part of the second support plate which does not include the radiation filter 24 is substantially transparent to visible light. The extent of the display area 23 adjoined by the first fluid 11 in each of the picture elements of the array of picture elements illustrated in FIG. 3 can be controlled to produce a full spectrum of colors for observation by a viewer. In other examples, different arrays of electrowetting picture elements may comprise different filters or different combinations of filters, for example different color filters. The radiation filter 25 may absorb at least one radiation wavelength in accordance with any example described above. The radiation filter may be formed so as to overlap a similar part of the display area for at least one adjacent picture element. In further examples, different of the picture elements respectively comprise a different radiation filter; for example, for a green picture element the radiation filter may be transmissive for green light but not for blue light, whereas for a blue picture element the radiation filter may be transmissive for blue light but not for red light.

Examples also relate to a method of manufacturing a support plate for an electrowetting display device.

During a manufacturing process of the display device, the support plate may be manufactured entirely, or may be provided during the manufacturing process as a partly or completely assembled support plate.

When manufacturing the support plate according to an example, a substrate is provided. Then, a material for forming the radiation filter configured to filter at least some of the radiation of the at least one predetermined wavelength is provided on the substrate. Providing the material for forming the radiation filter in examples includes applying photosensitive material on the substrate and then patterning the material appropriately using radiation exposure patterned by a mask, as will be appreciated by the skilled person.

The above examples are to be understood as illustrative examples. Further examples are envisaged.

In further examples, the radiation filter comprises a photochromic material, which is for example reactive to filter at least some of the radiation of the at least one predetermined wavelength. For example the radiation filter may be or comprise a layer of a photochromic material, for example having a substantially uniform thickness ("substantially" meaning within acceptable manufacturing tolerances). Therefore, in such examples, instead of or in addition to the filtering properties being provided by a pigment or a dye, for example, the photochromic material provides the filtering function. A photochromic material in examples is a material which changes its filtering properties upon exposure to light of at least one specific wavelength. The change in examples is reversible. For example, upon exposure to ultraviolet light and/or wavelengths of light present in sunlight, the photochromic material may change, i.e. react, to change from a state which for example does not substantially absorb the radiation of the at least one predetermined wavelength to a different state which does filter the radiation of the at least one predetermined wavelength which the first and/or second fluid is susceptible to deterioration by. The concentration of the photochromic material in the radiation filter is tuned in examples to obtain a suitable balance between the radiation filtering capabilities and radiation transmission properties when the photochromic material has reacted. Examples of a photochromic material which may be used include a spyrooxazine, a fulgide, a bianthrone (which may be considered an overcrowded alkene), an azo dye, a spiropyran, a diarylethene, a silver halide (AgX) or a zinc halide (ZnX₂), where X represents a halogen atom such as chlorine (CI), bromine (Br), fluorine (F) or iodine (I). Further examples of a suitable photochromic material will be known to the skilled person. In examples comprising a photochromic material, an anti-reflection layer may also be used to increase transmission of incident light to the photochromic material.

Examples are described above with the radiation filter being located between a surface for receiving incident radiation for entering a picture element and at least one of the first or second fluids. In some examples, the radiation filter in accordance with examples above is therefore located in the second support plate and the display area is part of the first support plate. It is envisaged in further examples that one support plate has the surface for receiving the incident light, the display area and the radiation filter. For example, referring to the examples described above using FIG. 1, the second support plate may, in addition to including the radiation filter, include the structure described above for the first support plate, with the first fluid being configurable to adjoin at least part of a display area which is a surface of the second support plate.

FIG. 4 shows schematically a system diagram of an example system, for example apparatus 30, comprising an electrowetting display device such as the electrowetting display device 1 described above comprising electrowetting display elements 2. The apparatus is for example a portable, i.e. mobile, device such as an electronic reader device such as a so-called "e-reader", a tablet computing device, a laptop computing device, a mobile telecommunications device, a watch or a satellite navigation device; the apparatus may alternatively be a display screen for installation in any machine or device requiring a display screen, for example a consumer appliance.

The system diagram illustrates an example of a basic hardware architecture of the apparatus 30. The apparatus includes at least one processor 31 connected to and therefore in data communication with for example: a display device control subsystem 32, a communications subsystem 34, a user input subsystem 36, a power subsystem 38 and system storage 40. The display device control subsystem is connected to and is therefore in data communication with the display device 1. The at least one processor 31 is for example a general purpose processor, a microprocessor, a digital signal processor (DSP), an application specific integrated circuit (ASIC), a field programmable gate array (FPGA) or other programmable logic device, a discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration. The processor may be coupled, via one or more buses, to read information from or write information to one or more memories, for example those of the system storage 40. The at least one processor may additionally, or in the alternative, contain memory, such as processor registers.

The display device control subsystem 32 for example includes electrowetting display element driver components, for use in applying a voltage to any of the electrowetting display elements, to address different such display elements. In examples the electrowetting display elements are configured according to an active matrix configuration and the display device control subsystem is configured to control switching elements such as thin film transistors (TFTs) of the display device 1 via circuitry to control the electrowetting display elements. The circuitry may include signal and control lines such as those described above.

The communications subsystem 34 for example is configured for the apparatus to communicate with for example a computing device via a data network, for example a computer network such as the Internet, a local area network, a wide area network, a telecommunications network, a wired network, a wireless network, or some other type of network. The communications subsystem 34 may further for example comprise an input/output (I/O) interface, such as a universal serial bus (USB) connection, a Bluetooth or infrared connection, or a data network interface for connecting the apparatus to a data network such as any of those described above. Content data as described later may be transferred to the apparatus via the communications subsystem.

The user input subsystem 36 may include for example an input device for receiving input from a user of the apparatus. Example input devices include, but are not limited to, a keyboard, a rollerball, buttons, keys, switches, a pointing device, a mouse, a joystick, a remote control, an infrared detector, a voice recognition system, a bar code reader, a scanner, a video camera (possibly coupled with video processing software to, e.g., detect hand gestures or facial gestures), a motion detector, a microphone (possibly coupled to audio processing software to, e.g., detect voice commands), or other device capable of transmitting information from a user to the device. The input device may also take the form of a touch-screen associated with the display device, in which case a user responds to prompts on the display device by touch. The user may enter textual information through the input device such as the keyboard or the touch-screen.

The apparatus may also include a user output subsystem (not illustrated) including for example an output device for providing output to a user of the apparatus. Examples include, but are not limited to, a printing device, an audio output device including for example one or more speakers, headphones, earphones, alarms, or haptic output devices. The output device may be a connector port for connecting to one of the other output devices described, such as earphones.

The power subsystem 38 for example includes power circuitry 42 for use in transferring and controlling power consumed by the apparatus. The power may be provided by a mains electricity supply or from a battery 44, via the power circuitry. The power circuitry may further be used for charging the battery from a mains electricity supply.

The system storage 40 includes at least one memory, for example at least one of volatile memory 46 and non-volatile memory 48 and may comprise a non-transistory computer readable storage medium. The volatile memory may for example be a Random Access Memory (RAM). The non-volatile (NV) memory may for example be a solid state drive (SSD) such as Flash memory, or Read Only Memory (ROM). Further storage technologies may be used, for example magnetic, optical or tape media, compact disc (CD), digital versatile disc (DVD), Blu-ray or other data storage media. The volatile and/or non-volatile memory may be removable or non-removable.

Any of the memories may store data for controlling the apparatus, for example components or subsystems of the apparatus. Such data may for example be in the form of computer readable and/or executable instructions, i.e. computer program instructions. Therefore, the at least one memory and the computer program instructions may be configured to, with the at least one processor, control a display effect provided by the electrowetting display device.

In the example of FIG. 4, the volatile memory 46 stores for example display device data 49 which is indicative of display effects to be provided by the display device 1. The processor 31 may transmit data, based on the display device data, to the display device control subsystem 32 which in turn outputs signals to the display device for applying voltages to the display elements, for providing display effects from the display device. The non-volatile memory 48 stores for example program data 50 and/or content data 52. The program data is for example data representing computer executable instructions, for example in the form of computer software, for the apparatus to run applications or program modules for the apparatus or components or subsystems of the apparatus to perform certain functions or tasks, and/or for controlling components or subsystems of the apparatus. For example, application or program module data includes any of routines, programs, objects, components, data structures or similar. The content data is for example data representing content for example for a user; such content may represent any form of media, for example text, at least one image or a part thereof, at least one video or a part thereof, at least one sound or music or a part thereof. Data representing an image or a part thereof is for example representative of a display effect to be provided by at least one electrowetting element of the electrowetting display device. The content data may include data representing a library of content, for example a library of any of books, periodicals, newspapers, movies, videos, music, or podcasts, each of which may be represented by a collection of data which represents for example one book or one movie. Such a collection of data may include content data of one type, but may instead include a mixture of content data of different types, for example a movie may be represented by data including at least image data and sound data.

Further examples in accordance with the accompanying claims are envisaged.

It is to be understood that any feature described in relation to any one example may be used alone, or in combination with other features described and may also be used in combination with one or more features of any other of the example, or any combination of any other of the examples. Furthermore, equivalents and modifications not described above may also be employed without departing from the scope of the accompanying claims.

## Claims

1. An electrowetting display device (1) comprising a picture element (2) including:
a surface for receiving incident radiation entering the picture element;
at least one wall (20);
a first fluid (11);
a second fluid (12) immiscible with the first fluid; and
a support plate (5) having a display area (23), an inner border (27) of the at least one wall corresponding to a perimeter of the display area, a size of a part of the display area adjoined by the first fluid depending on an applied voltage, at least one of the first fluid or the second fluid being susceptible to deterioration by exposure to radiation of at least one predetermined wavelength comprising at least one wavelength in the ultraviolet range of the electromagnetic spectrum and/or at least one wavelength in the infrared range of the electromagnetic spectrum;
wherein one of the support plate (5) or a further support plate (6) of the picture element is located between the surface and at least one of the first fluid or the second fluid, the one of the support plate or the further support plate comprising a layer comprising a radiation filter (25) configured to filter at least a portion of the radiation of the at least one predetermined wavelength and to transmit visible light,
wherein the radiation filter covers less than all of the display area, the radiation filter having an extent in a plane parallel to a plane of the display area that substantially covers the first fluid with a first voltage with a non-zero voltage magnitude applied to the picture element.

2. An electrowetting display device according to claim 1, wherein the first fluid and the second fluid are configurable to a plurality of configurations, a proportion of at least one of the first fluid or the second fluid overlapped by the radiation filter being different for different ones of the plurality of configurations.

3. An electrowetting display device according to claim 1, which is part of a system further comprising:
a control system (32) configured for selectively applying to the picture element one of a plurality of voltages of different magnitudes including the first voltage with the non-zero voltage magnitude.

4. An electrowetting display device according to claim 3, wherein:
the first voltage is a maximum voltage which the control system is configured to apply to the picture element.

5. An electrowetting display device according to claim 3, wherein the non-zero voltage magnitude of the first voltage corresponds to a configuration of the first fluid and the second fluid, with the first fluid contracted and with the size of the part of the display area adjoined by the first fluid being a minimum size of the part of the display area which the control system is configured to control the first fluid to adjoin, for providing a white display effect of the picture element.

6. An electrowetting display device according to claim 1, wherein the extent of the radiation filter in the plane parallel to the plane of the display area covers one of: up to 20%, up to 30%, up to 40%, up to about 50% or up to 50% of the display area.

7. An electrowetting display device according to claim 1, wherein the radiation filter comprises at least one of:
a compound for filtering the at least the portion of the radiation of the at least one predetermined wavelength,
a layer of a material for filtering the at least the portion of the radiation of the at least one predetermined wavelength,
a layer of a material for filtering the at least the portion of the radiation of the at least one predetermined wavelength and having a substantially uniform thickness, or
a non-fluid material.

8. An electrowetting display device according to claim 1, the support plate including at least one electronic component for applying the applied voltage to the picture element, the at least one electronic component including one or more of: a transistor, a capacitor or a control line, wherein the extent of the radiation filter substantially covers an extent of the at least one electronic component, the extent of the radiation filter and the extent of the at least one electronic component being substantially parallel to each other.

9. An electrowetting display device according to claim 1, wherein the radiation filter partly covers the display area and substantially all, some, or none of the at least one wall.

10. An electrowetting display device according to claim 1, wherein the radiation filter has a first part and a second part, the first part configured to filter a smaller quantity of the radiation of the at least one predetermined wavelength than the second part.

11. An electrowetting display device according to claim 1, wherein the radiation filter comprises at least one of:
a layer of photochromic material,
a layer of photochromic material having a substantially uniform thickness, or
a photochromic material comprising at least one of: a spyrooxazine, a fulgide, a bianthrone, an azo dye, a spiropyran, a diarylethene, a silver halide, or a zinc halide.

12. An electrowetting display device according to claim 1, wherein the extent of the radiation filter does not substantially cover a part of the display area not adjoined by the first fluid with the first voltage applied to the picture element.

13. An electrowetting display device according to claim 1, wherein the extent of the radiation filter covers one of: up to 50%, up to 60%, up to 70%, up to 80%,up to 90%, up to 95%, up to about 100%, or up to 100% of the first fluid with the first voltage applied to the picture element.

14. An electrowetting display device according to claim 1, wherein the radiation filter is substantially transparent to visible light.

15. A portable apparatus (30) comprising:
the electrowetting display device according to any one of claims 1 to 14;
at least one processor; and
at least one memory including computer program instructions, the at least one memory and the computer program instructions being configured to, with the at least one processor, control a display effect provided by the electrowetting display device.

## Patentansprüche

1. Elektrobenetzungsanzeigevorrichtung (1), die ein Bildelement (2) umfasst, beinhaltend:
eine Oberfläche zum Empfangen von einfallender Strahlung, die in das Bildelement eintritt;
zumindest eine Wand (20);
ein erstes Fluid (11);
ein zweites Fluid (12), das nicht mit dem ersten Fluid mischbar ist; und
eine Trägerplatte (5), die einen Anzeigebereich (23) aufweist,
wobei ein Innenrand (27) der zumindest einen Wand einem Umfang des Anzeigebereichs entspricht, wobei eine Größe eines Teils des Anzeigebereichs, dem sich das erste Fluid anschließt, von einer angelegten Spannung abhängt, wobei zumindest eines von dem ersten Fluid oder dem zweiten Fluid anfällig für Abbau durch Exposition gegenüber Strahlung von zumindest einer vorbestimmten Wellenlänge ist, umfassend zumindest eine Wellenlänge im Ultraviolettbereich des elektromagnetischen Spektrums und/oder zumindest eine Wellenlänge im Infrarotbereich des elektromagnetischen Spektrums;
wobei sich eine von der Trägerplatte (5) oder einer weiteren Trägerplatte (6) des Bildelements zwischen der Oberfläche und
zumindest einem von dem ersten Fluid oder dem zweiten Fluid befindet, wobei die eine von der Trägerplatte oder der weiteren Trägerplatte eine Schicht umfasst, die einen Strahlungsfilter (25) umfasst, der konfiguriert ist, um zumindest einen Teil der Strahlung von der zumindest einen vorbestimmten Wellenlänge zu filtern und um sichtbares Licht zu übertragen,
wobei der Strahlungsfilter weniger als den gesamten Anzeigebereich bedeckt, wobei der Strahlungsfilter eine Erstreckung in einer Ebene parallel zu einer Ebene des Anzeigebereichs aufweist, die das erste Fluid im Wesentlichen bedeckt, wobei eine erste Spannung mit einer Spannungsgröße ungleich Null an das Bildelement angelegt wird.

2. Elektrobenetzungsanzeigevorrichtung nach Anspruch 1, wobei das erste Fluid und das zweite Fluid zu einer Vielzahl von Konfigurationen konfigurierbar sind, wobei ein Anteil von zumindest einem von dem ersten Fluid oder dem zweiten Fluid überlappt durch den Strahlungsfilter für unterschiedliche aus der Vielzahl von Konfigurationen unterschiedlich ist.

3. Elektrobenetzungsanzeigevorrichtung nach Anspruch 1, die Teil eines Systems ist, ferner umfassend:
ein Steuersystem (32), das konfiguriert ist, um an das Bildelement selektiv eine aus einer Vielzahl von Spannungen von unterschiedlichen Größen anzulegen, darunter die erste Spannung mit der Spannungsgröße ungleich Null.

4. Elektrobenetzungsanzeigevorrichtung nach Anspruch 3, wobei:
die erste Spannung eine maximale Spannung ist, wobei das Steuersystem konfiguriert ist, um diese an das Bildelement anzulegen.

5. Elektrobenetzungsanzeigevorrichtung nach Anspruch 3, wobei die Spannungsgröße ungleich Null der ersten Spannung einer Konfiguration des ersten Fluids und des zweiten Fluids entspricht, wobei das erste Fluid kontrahiert ist, und wobei die Größe des Teils des Anzeigebereichs, dem sich das erste Fluid anschließt, eine Mindestgröße des Teils des Anzeigebereichs ist, wobei das Steuersystem konfiguriert ist, um das erste Fluid zu steuern, um sich anzuschließen, um einen Weißanzeigeeffekt des Bildelements bereitzustellen.

6. Elektrobenetzungsanzeigevorrichtung nach Anspruch 1, wobei die Erstreckung des Strahlungsfilters in der Ebene parallel zu der Ebene des Anzeigebereichs eines von Folgendem bedeckt: bis zu 20 %, bis zu 30 %, bis zu 40 %, bis zu etwa 50 % oder bis zu 50 % des Anzeigebereichs.

7. Elektrobenetzungsanzeigevorrichtung nach Anspruch 1, wobei der Strahlungsfilter zumindest eines des Folgenden umfasst:
eine Verbindung zum Filtern des zumindest einen Teils der Strahlung der zumindest einen vorbestimmten Wellenlänge,
eine Schicht aus einem Material zum Filtern des zumindest einen Teils der Strahlung der zumindest einen vorbestimmten Wellenlänge,
eine Schicht aus einem Material zum Filtern des zumindest einen Teils der Strahlung der zumindest einen vorbestimmten Wellenlänge und eine im Wesentlichen einheitliche Dicke aufweisend, oder
ein Nichtfluidmaterial.

8. Elektrobenetzungsanzeigevorrichtung nach Anspruch 1, wobei die Trägerplatte zumindest eine elektronische Komponente beinhaltet, um die angelegte Spannung an das Bildelement anzulegen, wobei die zumindest eine elektronische Komponente eines oder mehrere des Folgenden beinhaltet: einen Transistor, einen Kondensator oder eine Steuerleitung, wobei die Erstreckung des Strahlungsfilters im Wesentlichen eine Erstreckung der zumindest einen elektronischen Komponente bedeckt, wobei die Erstreckung des Strahlungsfilters und die Erstreckung der zumindest einen elektronischen Komponente im Wesentlichen parallel zueinander sind.

9. Elektrobenetzungsanzeigevorrichtung nach Anspruch 1, wobei der Strahlungsfilter den Anzeigebereich teilweise und im Wesentlichen die gesamte zumindest eine Wand, einen Teil oder nichts davon bedeckt.

10. Elektrobenetzungsanzeigevorrichtung nach Anspruch 1, wobei der Strahlungsfilter einen ersten Teil und einen zweiten Teil aufweist, wobei der erste Teil konfiguriert ist, um eine kleinere Menge der Strahlung der zumindest einen vorbestimmten Wellenlänge zu filtern als der zweite Teil.

11. Elektrobenetzungsanzeigevorrichtung nach Anspruch 1, wobei der Strahlungsfilter zumindest eines des Folgenden umfasst:
eine Schicht aus photochromem Material,
eine Schicht aus photochromem Material, die eine im Wesentlichen einheitliche Dicke aufweist, oder
ein photochromes Material, das zumindest eines des Folgenden umfasst: ein Spyrooxazin, ein Fulgid, ein Bianthron, einen Azofarbstoff, ein Spiropyran, ein Diarylethen, ein Silberhalid oder ein Zinkhalid.

12. Elektrobenetzungsanzeigevorrichtung nach Anspruch 1, wobei die Erstreckung des Strahlungsfilters nicht im Wesentlichen einen Teil des Anzeigebereichs bedeckt, dem sich nicht das erste Fluid anschließt, wobei die erste Spannung an das Bildelement angelegt ist.

13. Elektrobenetzungsanzeigevorrichtung nach Anspruch 1, wobei die Erstreckung des Strahlungsfilters eines von Folgendem bedeckt: bis zu 50 %, bis zu 60 %, bis zu 70 %, bis zu 80 %, bis zu 90 %, bis zu 95 %, bis zu etwa 100 % oder bis zu 100 % des ersten Fluids, wobei die erste Spannung an das Bildelement angelegt ist.

14. Elektrobenetzungsanzeigevorrichtung nach Anspruch 1, wobei der Strahlungsfilter im Wesentlichen transparent gegenüber sichtbarem Licht ist.

15. Tragbare Vorrichtung (30), umfassend:
die Elektrobenetzungsanzeigevorrichtung nach einem der Ansprüche 1 bis 14;
zumindest einen Prozessor; und
zumindest einen Speicher, der Computerprogrammanweisungen beinhaltet, wobei der zumindest eine Speicher und die Computerprogrammanweisungen konfiguriert sind, um mit dem zumindest einen Prozessor einen Anzeigeeffekt zu steuern, der durch die Elektrobenetzungsanzeigevorrichtung bereitgestellt wird.

## Revendications

1. Dispositif d'affichage d'électromouillage (1) comprenant un élément d'image (2) comportant :
une surface pour recevoir un rayonnement incident entrant dans l'élément d'image ;
au moins une paroi (20) ;
un premier fluide (11) ;
un second fluide (12) non miscible avec le premier fluide ; et
une plaque de support (5) ayant une zone d'affichage (23), une bordure intérieure (27) de l'au moins une paroi correspondant à un périmètre de la zone d'affichage, une taille d'une partie de la zone d'affichage contiguë au premier fluide dépendant d'une tension appliquée, au moins l'un du premier fluide ou du second fluide étant susceptible de se détériorer par exposition à un rayonnement d'au moins une longueur d'onde prédéterminée comprenant au moins une longueur d'onde dans la plage ultraviolette du spectre électromagnétique et/ou au moins une longueur d'onde dans la plage infrarouge du spectre électromagnétique ;
dans lequel l'une de la plaque de support (5) ou d'une autre plaque de support (6) de l'élément d'image est située entre la surface et au moins l'un du premier fluide ou du second fluide, celle de la plaque de support ou de l'autre plaque de support comprenant une couche comprenant un filtre de rayonnement (25) étant configurée pour filtrer au moins une partie du rayonnement de l'au moins une longueur d'onde prédéterminée et pour transmettre la lumière visible,
dans lequel le filtre de rayonnement couvre moins que l'ensemble de la zone d'affichage, le filtre de rayonnement ayant une étendue dans un plan parallèle à un plan de la zone d'affichage qui couvre sensiblement le premier fluide avec une première tension avec une amplitude de tension non nulle appliquée à l'élément d'image.

2. Dispositif d'affichage d'électromouillage selon la revendication 1, dans lequel le premier fluide et le second fluide sont configurables selon une pluralité de configurations, une proportion d'au moins l'un du premier fluide ou du second fluide chevauchée par le filtre de rayonnement étant différente pour différentes configurations de la pluralité de configurations.

3. Dispositif d'affichage d'électromouillage selon la revendication 1, qui fait partie d'un système comprenant en outre :
un système de commande (32) configuré pour appliquer sélectivement à l'élément d'image l'une d'une pluralité de tensions d'amplitudes différentes comportant la première tension avec une amplitude de tension non nulle.

4. Dispositif d'affichage d'électromouillage selon la revendication 3, dans lequel :
la première tension est une tension maximale que le système de commande est configuré pour appliquer à l'élément d'image.

5. Dispositif d'affichage d'électromouillage selon la revendication 3, dans lequel l'amplitude de tension non nulle de la première tension correspond à une configuration du premier fluide et du second fluide, le premier fluide étant contracté et la taille de la partie de la zone d'affichage contiguë au premier fluide étant une taille minimale de la partie de la zone d'affichage pour laquelle le système de commande est configuré pour commander le premier fluide pour qu'il soit contigu à celle-ci, afin de fournir un effet d'affichage blanc de l'élément d'image.

6. Dispositif d'affichage d'électromouillage selon la revendication 1, dans lequel l'étendue du filtre de rayonnement dans le plan parallèle au plan de la zone d'affichage couvre un pourcentage parmi : jusqu'à 20 %, jusqu'à 30 %, jusqu'à 40 %, jusqu'à environ 50 % ou jusqu'à 50 % de la zone d'affichage.

7. Dispositif d'affichage d'électromouillage selon la revendication 1, dans lequel le filtre de rayonnement comprend au moins l'un parmi :
un composé pour filtrer l'au moins une partie du rayonnement de l'au moins une longueur d'onde prédéterminée,
une couche d'un matériau pour filtrer l'au moins une partie du rayonnement de l'au moins une longueur d'onde prédéterminée,
une couche d'un matériau pour filtrer l'au moins une partie du rayonnement de l'au moins une longueur d'onde prédéterminée et ayant une épaisseur sensiblement uniforme, ou
un matériau non fluide.

8. Dispositif d'affichage d'électromouillage selon la revendication 1, la plaque de support comportant au moins un composant électronique pour appliquer la tension appliquée à l'élément d'image, l'au moins un composant électronique comportant un ou plusieurs parmi : un transistor, un condensateur ou une ligne de commande, dans lequel l'étendue du filtre de rayonnement couvre sensiblement une étendue de l'au moins un composant électronique, l'étendue du filtre de rayonnement et l'étendue de l'au moins un composant électronique étant sensiblement parallèles l'une à l'autre.

9. Dispositif d'affichage d'électromouillage selon la revendication 1, dans lequel le filtre de rayonnement couvre partiellement la zone d'affichage et sensiblement l'ensemble, une partie ou aucune partie de l'au moins une paroi.

10. Dispositif d'affichage d'électromouillage selon la revendication 1, dans lequel le filtre de rayonnement a une première partie et une seconde partie, la première partie étant configurée pour filtrer une plus petite quantité du rayonnement de l'au moins une longueur d'onde prédéterminée que la seconde partie.

11. Dispositif d'affichage d'électromouillage selon la revendication 1, dans lequel le filtre de rayonnement comprend au moins l'un parmi :
une couche de matériau photochromique,
une couche de matériau photochromique ayant une épaisseur sensiblement uniforme, ou
un matériau photochromique comprenant au moins l'un parmi :
une spyrooxazine, un fulgide, un bianthrone, un colorant azoïque, un spiropyrane, un diaryléthène, un halogénure d'argent ou un halogénure de zinc.

12. Dispositif d'affichage d'électromouillage selon la revendication 1, dans lequel l'étendue du filtre de rayonnement ne couvre sensiblement pas une partie de la zone d'affichage non contiguë au premier fluide avec la première tension appliquée à l'élément d'image.

13. Dispositif d'affichage d'électromouillage selon la revendication 1, dans lequel l'étendue du filtre de rayonnement couvre un pourcentage parmi : jusqu'à 50 %, jusqu'à 60 %, jusqu'à 70 %, jusqu'à 80 %, jusqu'à 90 %, jusqu'à 95 %, jusqu'à environ 100 % ou jusqu'à 100 % du premier fluide avec la première tension appliquée à l'élément d'image.

14. Dispositif d'affichage d'électromouillage selon la revendication 1, dans lequel le filtre de rayonnement est sensiblement transparent à la lumière visible.

15. Appareil portable (30) comprenant :
le dispositif d'affichage d'électromouillage selon l'une quelconque des revendications 1 à 14 ;
au moins un processeur ; et
au moins une mémoire comportant des instructions de programme informatique, l'au moins une mémoire et les instructions de programme informatique étant configurées pour, avec l'au moins un processeur, commander un effet d'affichage fourni par le dispositif d'affichage d'électromouillage.
